(19) **Europäisches Patentamt European Patent Office Office européen des brevets**

(11) **EP 4 345 194 B1**

(12) **EUROPEAN PATENT SPECIFICATION**

(45) Date of publication and mention of the grant of the patent:
**24.12.2025 Bulletin 2025/52**

(21) Application number: **23177286.4**

(22) Date of filing: **05.06.2023**

(51) International Patent Classification (IPC):
*C25B 1/04* (2021.01)    *C25B 9/70* (2021.01)
*C25B 15/023* (2021.01)    *C25B 15/027* (2021.01)
*H01M 8/04537* (2016.01)

(52) Cooperative Patent Classification (CPC):
**C25B 1/04; C25B 9/70; C25B 15/023;**
**C25B 15/027; H01M 8/04552;** H01M 8/0432

(54) **METHOD, APPARATUS AND COMPUTER PROGRAM FOR MONITORING A STATE OF A MULTI-CELL ELECTROLYZER**

VERFAHREN, VORRICHTUNG UND COMPUTERPROGRAMM ZUR ZUSTANDSÜBERWACHUNG EINES MEHRZELLEN-ELEKTROLYSEURS

PROCÉDÉ, APPAREIL ET PROGRAMME INFORMATIQUE DE SURVEILLANCE D'UN ÉTAT D'UN ÉLECTROLYSEUR MULTICELLULAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Validation States:
**MA TN**

(43) Date of publication of application:
**03.04.2024 Bulletin 2024/14**

(60) Divisional application:
**25215661.7**

(73) Proprietor: **Yokogawa Electric Corporation Musashino-shi, Tokyo 180-8750 (JP)**

(72) Inventors:
• **KRAMER, Martijn**
  **3825 HD Amersfoort (NL)**
• **KREUNING, Paul**
  **3825 HD Amersfoort (NL)**

(74) Representative: **Zimmermann, Tankred Klaus Schoppe, Zimmermann, Stöckeler Zinkler, Schenk & Partner mbB Patentanwälte Radlkoferstrasse 2 81373 München (DE)**

(56) References cited:
**EP-A1- 3 964 607        WO-A1-2022/129249**
**CN-A- 113 930 805        JP-A- 2008 231 537**
**JP-A- 2021 158 076**

## Description

## Field

Examples relate to a method, an apparatus, and a computer program for monitoring a state of a multi-cell electrolyzer.

## Background

Electrolyzers are devices that use electricity to drive an otherwise non-spontaneous chemical reaction, e.g., to split compounds, such as water, into their constituent elements through electrolysis. For example, hydrogen electrolyzers and chloralkali electrolyzers are important tools for the production of hydrogen and chlorine/sodium hydroxide, respectively. For large-scale applications, electrolyzers often use a large number of individual electrolyzer cells, which are often arranged in a horizontal stack.

The temperature in individual electrolyzer cells is an important metric, as the temperature is considered critical to the overall efficiency of the electrolyzer. In addition, the temperature may indicate individual cell issues and may cause cell issues, which may be related to a decrease in efficiency, or which may be caused by or lead to cell degradation. Further, in case of hydrogen electrolyzer cells, due to leakage, external flameless fire may occur, which is difficult to detect. However, due to the corrosive nature of the environment in the electrolyzer cells, the temperature of the cells is often not or only insufficiently measured.

JP 2021 158076 A is related to SOFC/SOEC (Solid Oxide Fuel Cell/Solid Oxide Electrolysis Cell) systems, describing improvements in power generation efficiency. Traditional SOFC/SOEC systems are known for their dual functionality: producing hydrogen through water electrolysis in SOEC mode and generating electricity through hydrogen oxidation in SOFC mode. JP 2021 158076 A proposes an enhanced SOFC/SOEC system with a cell that operates in two modes, integrated with a voltage adjustment unit, an oxygen storage unit, and a control unit. This system optimizes the voltage applied to the cell in SOFC mode and supplies oxygen from the oxygen storage unit to improve cell output voltage and reduce concentration resistance, thus improving power generation efficiency. The document outlines several embodiments and configurations to achieve this, including the addition of a heat storage unit connected to the cell for storing and supplying heat, thereby stabilizing cell temperature and further enhancing efficiency.

EP 3964607 A1 discusses a carbon dioxide electrolytic device designed to improve the efficiency and stability of electrolyzing carbon dioxide into valuable compounds. This device features an electrolysis cell with an anode for oxidizing water to form oxygen, a cathode for reducing carbon dioxide into carbon compounds, and a separator between the anode and cathode. It also includes a cooling flow path opposite the anode or cathode flow path, enhancing the system's efficiency by managing the device's temperature during operation. This setup aims to stabilize the electricity supply from renewable sources by converting carbon dioxide into chemical substances, addressing the challenges of energy storage and loss associated with conventional battery storage.

WO 2022/129249 A1 is about a control system and method for managing a micro-grid, specifically designed to work with electrolysers and renewable energy sources like solar or wind power. This system aims to efficiently use available power from these energy sources to produce hydrogen through electrolysis, which is a process that splits water into hydrogen and oxygen. The system is smart because it can decide how to distribute power among the electrolysers based on how much power is available and the condition of each electrolyser. It can also adjust its operations based on real-time data about the electrolysers' performance. This setup is particularly useful for storing renewable energy as hydrogen gas, which can be used later, addressing the issue of renewable energy sources not always producing power when it is needed.

JP 2008 231537 A is about an electrolysis simulation device, method, and program designed to simplify the simulation of temperature changes in electrolytic cells used for producing electrolysis products. Traditionally, determining the temperature changes required complex calculations, considering factors like current efficiency and the characteristics of the electrolytic membrane. The described system aims to accurately simulate these temperature changes without complicated computations, using a direct current (DC) power supply, multiple electrolytic cells, a heat exchanger, and a mechanism for supplying electrolyte solutions at set temperatures. It stores model data on resistance values, heat amounts relative to current values, and the generated amounts of various electrolysis products, facilitating easier prediction and management of electrolytic cell conditions.

There may be a desire for an improved concept for monitoring a state of a multi-cell electrolyzer.

## Summary

This desire is addressed by the subject-matter of the independent claims.

Various examples of the present disclosure are based on the finding, that, during normal operation, it is usually possible to predict the temperature of the individual cells of a multi-cell electrolyzer, e.g., using knowledge about the physics and chemistry of the cells, and information about other process parameters, such as stack current and individual cell voltage. While the prediction of the temperature is primarily accurate in case of normal operation of healthy cells, it can be used for the purpose of identifying faults and degradation in the cells, by comparing the predicted temperature to a measured temperature of the cell. This measured temperature can be obtained, for example, using a fiber-optic temperature sensor. A deviation between the expected temperature and the measured temperature can be used to identify abnormalities. In this case, a notification is provided to alert an operator of the multi-cell electrolyzer of the abnormality. If the electrolyzer is considered to be operating normally, the measured and predicted values may be provided in a graphical format, allowing an operator to visually check that the electrolyzer is working as expected. The proposed concept applies to various types of electrolyzers, including electrolyzers with unipolar cells and electrolyzers with bipolar cells, as well as electrolyzers where the cells are arranged in a series configuration and electrolyzers where the cells are arranged in parallel, e.g., in a parallel stack.

Some aspects of the present disclosure relate to a method for monitoring a state of a multi-cell electrolyzer. The method comprises obtaining sensor information. The sensor information comprises at least information on a measured temperature of the individual cells of the multi-cell electrolyzer. The method comprises predicting, based on the sensor information and for each cell of the multi-cell electrolyzer, an expected temperature value of the cell of the multi-cell electrolyzer. The method comprises providing a notification if a deviation of the expected temperature value of a cell and the measured temperature of the cell matches a temperature deviation condition. This way, the operator of the electrolyzer is notified in case the electrolyzer is not working as expected, e.g., due to degradation of the cells, or due to an event such as a flameless fire caused by hydrogen leakage.

There are different ways of predicting the temperature of the cells. One option is to derive the expected temperature from the cell voltage of the respective cell and from the stack current, e.g., by a model like an energy balance based model. For example, the sensor information may comprise information on a stack current of the multi-cell electrolyzer and information on an individual cell voltage of cells of the multi-cell electrolyzer. The expected temperature value of the cell may be predicted based on the cell voltage of the cell and based on the stack current of the multi-cell electrolyzer. In particular, the expected temperature value of the cell may be predicted based on an energy balance that is based on the cell voltage of the cell and based on the stack current of the multi-cell electrolyzer. This way, a model that is based on the physics and chemistry of the cells is used to predict the temperature of the cell.

As an alternative to deriving the expected temperature from the cell voltage of the respective cell and from the stack current, the temperature of other cells may be used as reference. For example, the expected temperature value of the cell may be predicted based on the measured temperature of one or more neighboring cells of the multi-cell electrolyzer. It is expected that neighboring cells operate in a similar manner, such that deviations are indicative of degradation or failure of a cell.

Alternatively, or additionally, an average over multiple other cells (e.g., over all of the cells of the electrolyzer, or over a select group of cells) may be used to predict the temperature of the cell. For example, the expected temperature value of the cell may be predicted based on a mean or average of the measured temperatures of the cells of the multi-cell electrolyzer. This may reduce the impact of single measurements on the expected temperature value.

In some examples, the expected temperature value of the cell may be predicted based on one or more reference cells of the multi-cell electrolyzer. This way, (only) healthy (e.g., new) cells may be used to determine the expected temperature value, which facilitates identifying cells that show their age through the deviation from the reference.

In general, the one or more reference cells may be chosen by a user, e.g., based on which cell(s) have been replaced last. Alternatively, the one or more reference cells may be selected using an automated process. For example, the method further may comprise selecting the one or more reference cells based on the sensor information. This way, no user interaction may be necessary to set the one or more reference cells.

To avoid false alarms at occasional faulty measurements, or to detect long-term occurrence of small deviations, instead (or in addition) to using the temperature measurements directly, an integral or derivative of the temperature may be calculated and compared to an integral or derivate of the predicted temperature. For example, the expected temperature value of a cell may correspond to an integral or derivative of an expected temperature of the cell over time, voltage or current. The deviation of the expected temperature value of a cell and the measured temperature of the cell may be determined between the integral or derivative of the expected temperature of the cell and a corresponding integral or derivative of the measured temperature of the cell.

A major concern when operating hydrogen electrolyzers is the occurrence of so-called flameless fires, which are difficult to detect as they are invisible. However, they can be detected by detecting spikes in the measured temperature of a cell. Accordingly, the method may comprise providing a notification about a suspected fire if the deviation between the expected temperature value of a cell and the measured temperature of the cell exhibits a spike.

Another important parameter being monitored in a multi-cell electrolyzer is the cell voltage of the individual cells, i.e., the potential between the cathode and the anode of the cell. Similar to the monitoring of the temperature, an expected voltage value may be used and compared to the measured cell voltage value, to determine whether the cell is behaving as expected. For example, the sensor information may comprise information on an individual cell voltage of cells of the multi-cell electrolyzer. The notification may be provided if the deviation of the expected temperature value of a cell and the measured temperature of the cell matches the temperature deviation condition and if a deviation between the cell voltage of the cell and an expected voltage value matches a voltage deviation condition. In addition to the temperature deviation, the voltage deviation can also be indicative of degradation or failure of a cell.

There are various ways for obtaining the expected voltage value. In some examples, the voltage value may be deduced from the stack current and/or other parameters. For example, the sensor information may comprise information on a stack current of the multi-cell electrolyzer and information on an individual cell voltage of cells of the multi-cell electrolyzer. The method may comprise predicting, based on the sensor information and for each cell of the multi-cell electrolyzer, an expected voltage value of the cell of the multi-cell electrolyzer. Alternatively, the expected voltage value may be defined by a user. In other words, the method may comprise obtaining the expected voltage value of the cell of the multi-cell electrolyzer as an input.

As outlined above, also a voltage deviation matching a voltage deviation condition may be indicative of a degradation or failure of a cell. Accordingly, the method may comprise providing a notification if a deviation of the expected voltage value of a cell and the measured voltage of the cell matches a voltage deviation condition. This may be done separately from (e.g., in addition to) the temperature deviation-based notification.

In general, the individual cell voltage depends on the condition of the cell, and on the current being used to drive the cell. To further evaluate the condition of the cell, a response of the cell to load changes, and in particular a time required for reacting to a load change, may be monitored. Thus, the expected voltage value may comprise an expected voltage and an expected time for reaching the expected voltage in response to a load change.

The condition of cells changes over time, as the electrolysis being performed by the cells causes deterioration of the membrane of the individual cells. The resulting cell voltage, which is dependent on the condition of the cell, can be modeled using a multi-parameter regression formula. For example, the expected voltage value may be based on a multi-parameter regression formula. The multi-parameter regression formula may comprise a first parameter that models undesired reactions at electrodes, a second parameter that models at least one of membrane ruptures, pin holes and degradation, and a third parameter that models a degradation of the electrodes. The method may comprise determining a deviation of the expected voltage value of a cell and the measured voltage of the cell. The method may comprise identifying a contribution of the first, second and third parameter to the deviation using the multi-parameter regression formula. This formula has three parameters, one of which is independent of the current, one is linearly dependent of the current, and one is logarithmically dependent on the current. By varying the current, the impact of the different parameters on the expected voltage of the cell can be identified, which improves the insight on whether or when a replacement or maintenance of a cell is required.

As previously discussed in connection with the temperature value, the expected and measured voltage values also do not necessarily correspond to single voltages. Instead, the respective voltage may be integrated, or a derivative may be calculated. For example, the expected voltage value of a cell may correspond to an integral or derivative of an expected voltage of the cell over time, temperature or current. The deviation of the expected voltage value of a cell and the measured voltage of the cell may be determined between the integral or derivative of the expected voltage of the cell and a corresponding integral or derivative of the measured voltage of the cell. This may facilitate avoiding false alarms at occasional faulty measurements, or detecting long-term occurrence of small deviations,

Another important factor is the development of the cell voltages over time. For example, the method may comprise determining, for each cell of the multi-cell electrolyzer and/or for one or more reference cells, a prior voltage value of the cell based on the sensor information and comparing the prior voltage value with a present voltage measurement included in the sensor information. This way, an impact of degradation of the respective cell can be determined.

In the present method, a notification is provided. For example, the notification may be provided in order to alert the operator of critical or potentially critical cell conditions or incidents. In addition to the notification(s), the measured and/or calculated values may be visualized, so that the operator of the electrolyzer can draw their own conclusions. For example, the method further may comprise providing a visual representation of at least one of the sensor information, the predicted temperature value of the respective cells, a predicted voltage value of the respective cells, and a prior voltage value of the respective cells.

As outlined above, one option for measuring the temperature of the cells uses a fiber-optic temperature sensor. Accordingly, the information on the measured temperature of the cells of the multi-cell electrolyzer may be obtained from a fiber-optic temperature sensor. A fiber-optic temperature sensor can be used to determine the temperatures of the cells using a single (or a few) fiber-optic cable, which may reduce the effort required for measuring the temperature.

Alternatively, the information on the measured temperature of the cells of the multi-cell electrolyzer may be obtained from a camera-based temperature sensor. This approach may require a higher computational effort, as the temperatures have to be derived from image data.

Claim 15 relates to a computer program having a program code for performing a method for monitoring a state of a multi-cell electrolyzer, when the computer program is executed on a computer, a processor, or a programmable hardware component. The method comprises obtaining sensor information. The sensor information comprises at least information on a measured temperature of the individual cells of the multi-cell electrolyzer. The method comprises predicting, based on the sensor information and for each cell of the multi-cell electrolyzer, an expected temperature value of the cell of the multi-cell electrolyzer. The method comprises providing a notification if a deviation of the expected temperature value of a cell and the measured temperature of the cell matches a temperature deviation condition.

Claim 16 relates to a corresponding apparatus for monitoring the state of a multi-cell electrolyzer. The apparatus comprising interface circuitry for obtaining the sensor information from one or more sensors, and processing circuitry configured to perform a method for monitoring a state of a multi-cell electrolyzer. The method comprises obtaining sensor information. The sensor information comprises at least information on a measured temperature of the individual cells of the multi-cell electrolyzer. The method comprises predicting, based on the sensor information and for each cell of the multi-cell electrolyzer, an expected temperature value of the cell of the multi-cell electrolyzer. The method comprises providing a notification if a deviation of the expected temperature value of a cell and the measured temperature of the cell matches a temperature deviation condition.

## Brief description of the Figures

Some examples of apparatuses and/or methods will be described in the following by way of example only, and with reference to the accompanying figures, in which:

Fig. 1a    shows a flow chart of an example of a method for monitoring a state of a multi-cell electrolyzer;

Fig. 1b    shows a schematic diagram of an example of an apparatus for monitoring a state of a multi-cell electrolyzer, and of a system comprising such an apparatus;

Figs. 2a and 2b    show flow charts of examples of flows of measurement and processing of process values of cells of a multi-cell electrolyzer;

Fig. 3    shows a schematic diagram of an example of electrolyzer cells encircled by a fiber-optic cable;

Fig. 4    shows a schematic diagram of an example of electrolyzer cells with a woven fiber-optic cable; and

Fig. 5    shows a schematic diagram of an example of a data processing system.

## Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Various examples of the present disclosure relate to a method, apparatus, and computer program method for monitoring a state of a multi-cell electrolyzer.

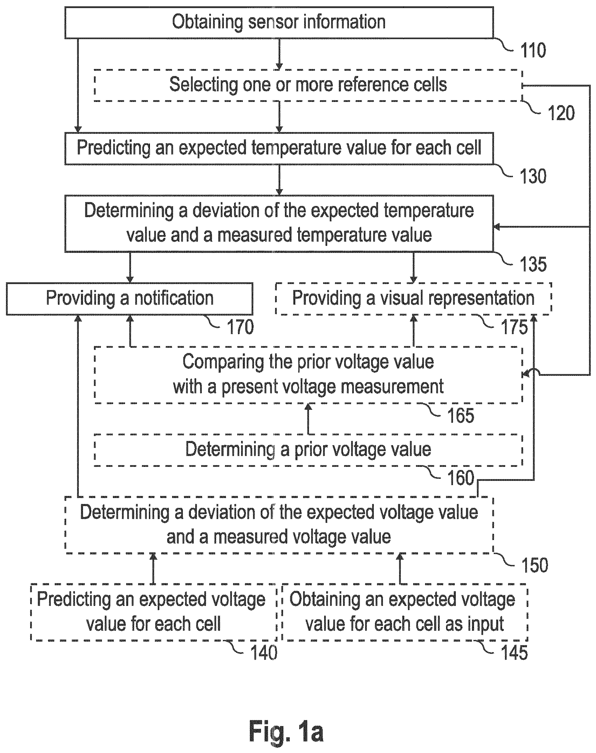

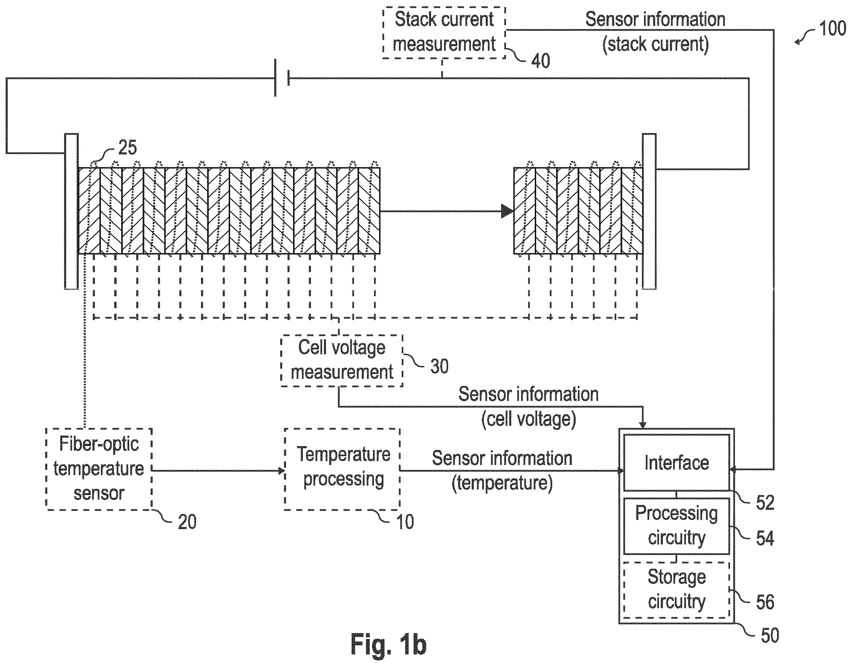

Fig. 1a shows a flow chart of an example of a method for monitoring a state of a multi-cell electrolyzer 100 (shown in Fig. 1b). The method comprising obtaining 110 sensor information. The sensor information comprises at least information on a measured temperature of the individual cells of the multi-cell electrolyzer 100. The method comprises predicting 130, based on the sensor information and for each cell of the multi-cell electrolyzer, an expected temperature value of the cell of the multi-cell electrolyzer. The method comprises providing 170 a notification if a deviation of the expected temperature value of a cell and the measured temperature of the cell matches a temperature deviation condition.

In the following, a short introduction is given on the various components involved or referenced herein. Fig. 1b shows a schematic diagram of the apparatus for monitoring the state of the multi-cell electrolyzer, and of a system comprising such an apparatus. The apparatus 50 comprises interface circuitry 52 for obtaining sensor information from one or more sensors, and processing circuitry 54 configured to perform the method of Fig. 1a. Optionally, the apparatus 50 further comprises storage circuitry 56, for temporarily or permanently storing information, such as reference values, previous measurements etc. The processing circuitry 54 is coupled with the interface circuitry 52 and with the optional storage circuitry 56. The processing circuitry 54 may be configured to provide the functionality of the apparatus 50, in conjunction with the interface circuitry 52 (for exchanging information, e.g., with a temperature processing entity 10 or fiber-optic temperature sensor 20, a cell voltage measurement entity 30, and/or a stack current measurement entity 40) and/or the optional storage circuitry 56 (for storing information). For example, the apparatus 50 may provide its functionality by the processing circuitry 54 executing machine-readable instructions, which may be stored in the storage circuitry 56.

Both the method and the apparatus 10, and a corresponding computer program, are used for monitoring a state of a multi-cell electrolyzer 100. In the following, the monitoring of the state of the multi-cell electrolyzer focuses on the monitoring of the temperature of the individual cells of the electrolyzer, followed by a monitoring of the cell voltage of the individual cells of the electrolyzer. Both the temperature and the cell voltage of the individual cells are dependent on the load of the electrolyzer, which is determined by the stack current being applied to the cells of the electrolyzer, i.e., the current applied to the entire stack of cells. Therefore, the sensor information 110 at least comprises the information on the measured temperature of the individual cells. In addition, the sensor information 110 may comprise information on a stack current of the multi-cell electrolyzer and information on an individual cell voltage of the cells of the multi-cell electrolyzer, which may also be used for monitoring the multi-cell electrolyzer. These components of the sensor information 110 may be obtained (e.g., received, requested) from different sensors or processing entities of the system. For example, the information on the measured temperature may be obtained from a temperature sensor (such as the fiber-optic temperature sensor 20 shown in Fig. 1b) or a processing entity 10 being used to pre-process the data provided by the fiber-optic temperature sensor 20. The information on the individual cell voltage may be obtained from a processing entity 30 performing or processing the cell voltage measurement. The information on the stack current may be obtained from a processing entity 40 performing or processing the stack current measurement. Typically, the processing entity 40 performing or processing the stack current measurement is part of a control system of the electrolyzer 100.

While the stack current and the cell voltages are rather straight-forward to capture, more effort may be required for capturing the temperatures of the individual cells. In the following, two different approaches are discussed.

In a first approach, a fiber-optic temperature sensor is used to provide the information on the temperature of the individual cells. In other words, the information on the measured temperature of the cells of the multi-cell electrolyzer may be obtained from a fiber-optic temperature sensor. This approach is shown in Figs. 1b, 3, 4 and 5, and described in the following. In the following, it is assumed that the measurements of the fiber-optic temperature sensor are preprocessed by the processing entity 10, and then provided to the apparatus 50. However, the processing done by the processing entity 10 may alternatively be performed by the apparatus 50, or the fiber-optic temperature sensor 20. For example, the processing entity 10 may be implemented similar to the apparatus 50, including an interface for communicating with the fiber-optic temperature sensor and the apparatus 50, processing circuitry for performing the calculations, and storage circuitry for storing information, such as a mapping.

In general, a fiber-optic temperature sensor can be used to provide temperature sensor information, which includes temperature values measured at a plurality of intervals of a fiber-optic cable 25 (shown in Fig. 1b) used by the fiber-optic temperature sensor. Using the temperature sensor data, for each cell of the multi-cell electrolyzer, at least one temperature may be calculated based on the temperature values measured at the plurality of intervals.

The first approach is based on using fiber-optic temperature measurements. In general, such fiber-optic temperature measurements are based on effects that the temperature has on the fiber-optic cable 25. For example, depending on the temperature, the reflection or scattering of light or sound may be different at different intervals of the fiber-optic cable. There are various techniques for implementing such a fiber-optic temperature sensor. For example, the fiber-optic temperature sensor may be a fiber Bragg grating sensor, i.e., a sensor that is based on sensing temperature-dependent variations in the Bragg wavelength. Alternatively, the fiber-optic temperature sensor may be a Raman-scattering-based sensor, which is based on the temperature-dependency of inelastic scattering on optical phonons. Alternatively, the fiber-optic temperature sensor may be an (intrinsic or extrinsic) interferometric fiber-optical temperature sensor, i.e., a temperature sensor that is based on a temperature-dependent change of an optical resonator length. Alternatively, the fiber-optic temperature sensor may be a Brillouin scattering-based distributed temperature sensor (which is based on the temperature-dependent scattering of acoustic phonons). However, the proposed concept is not limited to a particular implementation of a fiber-optic temperature sensor.

Fiber-optic temperature sensors have in common, that they allow measurement of temperatures at user-defined or system pre-defined intervals. For example, in an example fiber-optic temperature used for implementing the proposed concept, the fiber-optic temperature sensor provides a measurement in one-meter increments, i.e., a separate temperature value for each meter of a multiple kilometer long fiber-optic cable. In some examples, the measurements of the temperature values are taken at a specific point of each meter, while in other examples, an average temperature value is measured over a one-meter stretch or a particular stretch of fiber-optic cable. Depending on how the fiber-optic cable is arranged at the cells of the electrolyzer, these temperature values may then be used to calculate the temperatures at the individual cells. The process thus starts with obtaining the temperature sensor information with the temperature values from the fiber-optic temperature sensor. The temperature sensor information comprises a plurality of temperature values, one temperature value for each interval. For example, the plurality of intervals may be equidistant intervals (e.g., the aforementioned one-meter intervals), e.g., defined by the fiber-optic temperature sensor 20. Alternatively, the plurality of intervals may be custom intervals that are tailored to the geometry of the cells of the multi-cell electrolyzer, and the pattern used for arranging the fiber-optic cable 25 at (or in) the cells. These temperature values can now be used to calculate the temperatures for the individual cells. For this purpose, information on which temperature value is taken at which cell of the electrolyzer may be used. In the following, this information is denoted a mapping between the intervals of the fiber-optic cable and the cells of the multi-cell electrolyzer. For example, the plurality of intervals may be mapped to the cells of the multi-cell electrolyzer. For example, each of the intervals (or a subset of the intervals, in case an interval is between two cells or not arranged at a cell) may be mapped to one of the cells. Accordingly, each cell may have at least one (preferably multiple) interval mapped to it, which can then be used to calculate the temperature or temperatures of the cell. Using the mapping, a selection may be performed as to which temperature value is used to calculate the at least one temperature of a cell. In other words, for each cell of the multi-cell electrolyzer, one or more temperature values may be selected based on the mapping of the plurality of intervals to the cells of the multi-cell electrolyzer. The selected temperature values may be used to calculate the at least one temperature of the cell. For example, in some cases, a single temperature may be calculated for each cell based on multiple intervals, and thus temperature values, mapped to the cell, e.g., using an average or median of the temperature values. Alternatively, multiple temperatures may be calculated for each cells based on multiple intervals, and thus temperature values, mapped to the cell. Preferably, to detect flameless fires as different sections of the cells, multiple temperatures may be calculated per cell.

The mapping between the intervals and the cells depends on how the fiber-optic cable is arranged at or in the respective cells. In general, two general placement options may be distinguished - at the outside of the cells (e.g., attached to the hull or outer surface, or between the cells and the insulation), or integrated into the cells. For example, the fiber-optic cable may be attached to a hull or outer surface of the cells of the multi-cell electrolyzer. This approach is more suitable for later installations at existing electrolyzers or for use with third-party electrolyzers. Alternatively, the fiber-optic cable may be integrated into the cells, cell walls, heating pipes or cooling pipes of the multi-cell electrolyzer. This requires more effort. However, due to the closer proximity, the measurements may be more exact than measurements from outside the cells. In any case, the fiber-optic cable may cover multiple cells of the multi-cell electrolyzer. For example, a single fiber-optic cable may suffice for measuring the temperature at all of the cells of the multi-cell electrolyzer. Alternatively, multiple fiber-optic cables may be used, with the plurality of intervals extending through the multiple fiber-optic cables. With respect to the mapping between intervals and cells, a complexity may be slightly increased in this case.

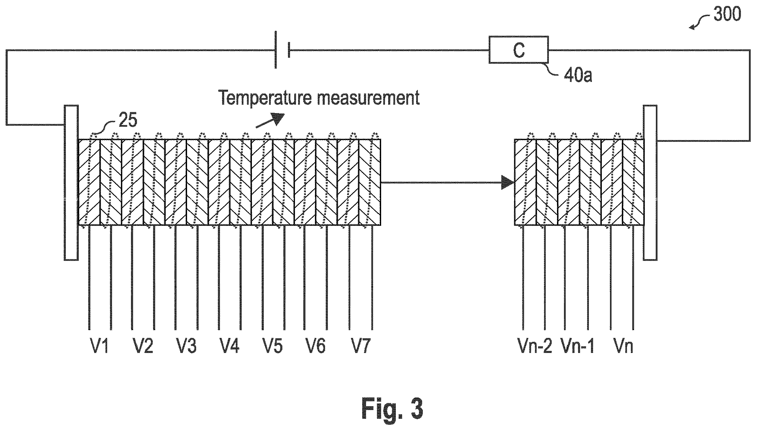

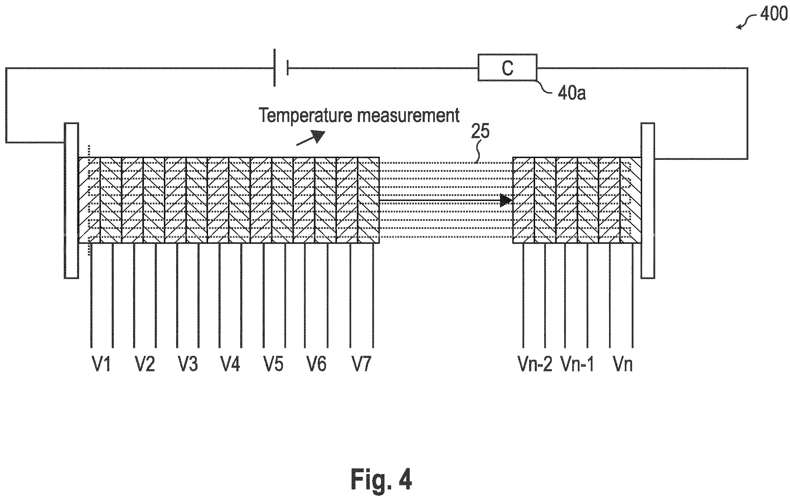

The mapping between intervals and cells depends on the geometry of the electrolysis cells and on the pattern being used for arranging the fiber-optic cable at or in the cells. In Figs. 3 and 4, two options for arranging the fiber-optic cable are shown. In Fig. 3 (and Fig. 1b), the fiber-optic cable is shown encircling the cells of the electrolyzer. In other words, the fiber-optic cable may be arranged in a pattern encircling the respective cells successively at an outer perimeter of the cells (e.g., between the cell walls and the insulation). For example, as shown in Fig. 1b, the cells of the electrolyzer may be arranged in a horizontal stack (or alternatively, in a vertical stack). The fiber-optic cable may be arranged in a pattern in which the fiber-optic cable subsequently encircles the individual cells of the stack, e.g., such that each cell is encircled (e.g., surrounded, enclosed) at least once. In some examples, each cell may be wound multiple times per cell, e.g., in little areas per cell, to determine an average temperature value on different locations per cell, or to determine a two-dimensional temperature profile of the cell. For example, a spiral pattern or snail pattern may be used (e.g., with mostly straight lines, or with mostly curves (not shown). The spiral pattern or snail pattern may be repeated multiple times per cell, with the same (or a similar pattern) being used for the other cells as well. Alternatively, or additionally, a serpentine pattern/zig-zag pattern may be repeated multiple times per cell, with the same (or a similar pattern) being used for the other cells as well. For example, in case the diameter of an electrolyzer stack is less then, for example, 1 meter (e.g., less than the measurement accuracy of the fiber-optic temperature sensor) or if the temperature of different areas on the outside of the electrolyzer needs to be measured, a wiring may be applied, where, for example, one part of the individual electrolyzer cell is circled, surrounded or covered a few times (by zig-zagging up and down over e.g. 20 cm as shown, or by using a spiral/snail pattern) before moving to the next spot on the same cell further on the outer wall. In more general terms, the fiber-optic cable is arranged in a pattern (i.e., the pattern encircling the cells, or a serpentine pattern), that comprises a sub-pattern, such as the spiral/snail sub-pattern or the serpentine/zig-zag sub-pattern, that is repeated multiple times within the pattern. Each of the sub-patterns may be arranged at exactly one of the cells (i.e., a sub-pattern might not cover multiple cells). Each cell may be covered by multiple repetitions of the sub-pattern, e.g., by a sequence of sub-patterns being repeated along a perimeter of the respective cell. The mapping between intervals and cells may then be based on this circular or combined circular and repeated sub-pattern pattern, e.g., based on knowledge of which interval is arranged at which cell of the electrolyzer. This may be calculated using a three-dimensional computer-aided design drawing or be determined manually using external markings on the fiber-optic cable.

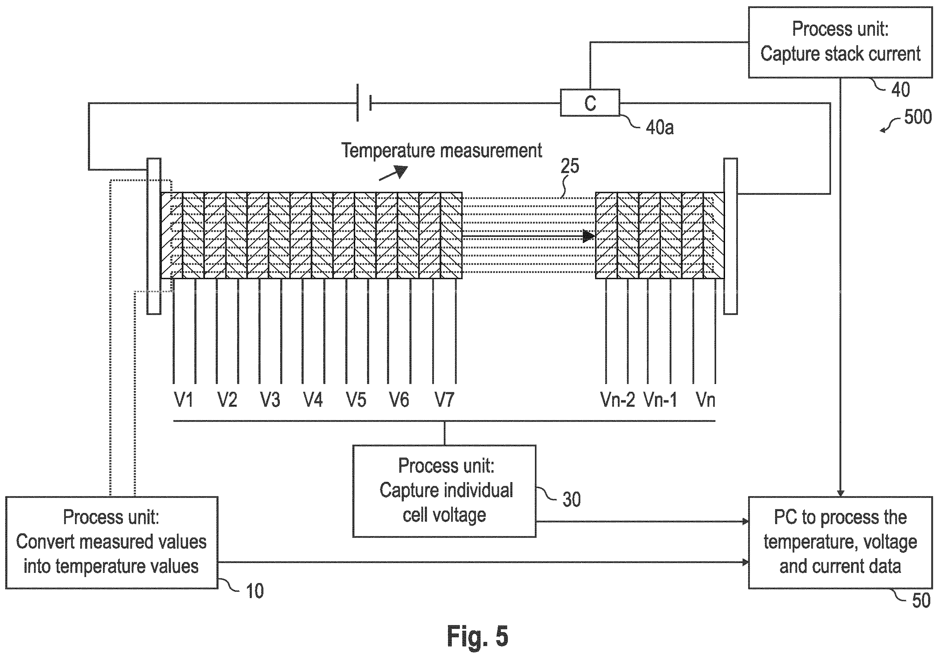

Alternatively, a woven or serpentine pattern may be used, as shown in Figs. 4 and 5. In other words, the fiber-optic cable may be arranged in a serpentine pattern, such that the optical cable repeatedly extends along a sequence of cells of the multi-cell electrolyzer, turns back, extends back along the sequence of cells in reverse direction, and turns back again to extend along the sequence of cells again. Using the serpentine pattern, the optical cable passes by each cell multiple times. Depending on the size of the cells, and size of the intervals, every time (or a subset of times) the fiber-optic cable passes a cell, a temperature value may be mapped to the cell. Similar to the examples shown in connection with the circular pattern, the serpentine/woven pattern may be combined with a smaller spiral/snail pattern or smaller serpentine/zig-zag pattern, to cover one part of the individual electrolyzer cell multiple times. Again, the mapping between intervals and cells may then be based on this serpentine or woven pattern, e.g., based on knowledge of which interval is arranged at which cell of the electrolyzer. This may be calculated using a three-dimensional computer-aided design drawing or be determined manually using external markings on the fiber-optic cable.

As outlined in connection with the circular pattern, in some examples, multiple temperature values may be obtained for each cell, e.g., using the plurality of sub-patterns, such that a two-dimensional temperature profile of the respective cells can be created. For example, method may comprise obtaining or creating a two-dimensional temperature profile of the individual cells based on the temperature values and based on the mapping between the plurality of intervals and the cells of the multi-cell electrolyzer. In this case, the mapping between the plurality of intervals and the plurality of cells may comprise a mapping between the plurality of intervals and a plurality of points on each cell of the electrolyzer, e.g., a plurality of points of a two-dimensional grid of points of each cell of the electrolyzer.

In a second approach, the information on the measured temperature of the cells of the multi-cell electrolyzer may be obtained from a camera-based temperature sensor, e.g., an infrared camera sensor. In this case, the pixels of (infrared) image data provided by the camera-based temperature sensor may be mapped to the cells of the multi-cell electrolyzer, e.g., by the processing entity 10 or the apparatus 50. Accordingly, the sensor information may comprise the (infrared) image data or the cell temperatures derived from the infrared image data.

The sensor information, which includes the information on the measured temperature of the individual cells, and optionally information on the stack current and/or individual cell currents, is then used to predict the temperature value of the cells of the multi-cell electrolyzer. In particular, for each cell of the cells of the electrolyzer, a separate temperature value is predicted. This prediction may be done using various approaches. For example, the physical and chemical properties of the cell may be used, together with the cell voltage and stack current, to predict the temperature of the cell. In other words, the expected temperature value of the cell may be predicted based on the cell voltage of the cell and based on the stack current of the multi-cell electrolyzer (based on the sensor information). In particular, this can be done by looking at the energy balance of the cell. In other words, the expected temperature value of the cell may be predicted based on an energy balance that is based on the cell voltage of the cell and based on the stack current of the multi-cell electrolyzer. For example, electrochemical and thermal models may be used to calculate the hydrogen and oxygen production and the temperature increase caused by the electrolysis to predict the temperature of the individual cells. In some examples, the (known or determined) condition of the cell, with respect to undesired reactions at the electrodes, membrane ruptures, pin holes, degradation, and degradation of electrodes, may be taken into account when predicting the expected temperature value of the cell based on the cell voltage of the cell and based on the stack current of the multi-cell electrolyzer.

As an alternative to, or in addition to, deriving the expected temperature from the cell voltage of the respective cell and from the stack current, the temperatures of other cells may be used to predict the temperature of a cell. For example, as the multi-cell electrolyzer is driven by a single stack current, it is expected that all of the cells have similar temperatures, with minor variations due to aging or external influences. Therefore, the expected temperature may be predicted based on the (measured) temperature(s) of one or more other cells. For example, the expected temperature value of the cell may be predicted based on the measured temperature of one or more neighboring cells of the multi-cell electrolyzer, i.e., of one or more cells that are arranged directly adjacent to the cell for which the temperature is predicted. For example, a single cell may be used to predict the temperature of a neighboring cell. Alternatively, if two neighboring cells are available, both may be used. Alternatively, one or more cells that are known (or assumed) to be healthy, e.g., as they have recently been replaced, or as they are shown to have a "healthy" temperature (or "healthy" cell voltage) may be used as reference cell(s). In other words, the expected temperature value of the cell may be predicted based on one or more reference cells of the multi-cell electrolyzer. The one or more reference cells may be user-defined reference cells or may be determined automatically based on their age (with the most recently added cells being used as reference cells) or based on the sensor information being determined for them. For example, as further shown in Fig. 1a, the method further may comprise selecting 120 the one or more reference cells based on the sensor information, e.g., according to a selection criterion. For example, after selecting the one or more reference cells, the method may continue (directly) with determining 135 the deviation of the expected temperature value and the measured temperature value, determining 150 a deviation of the expected voltage value and a measured voltage value, and/or with comparing 165 the prior voltage value with the present voltage measurement. For example, the selection criterion may relate to a difference of the measured temperature (or measured voltage) from a user-defined reference temperature (or used-defined reference voltage), a difference of the measured temperature (or measured voltage) from an average temperature (or average voltage) across all cells, or a difference of the measured temperature (or measured voltage) from a lowest measured temperature (or lowest measured voltage) across all cells. In any case, the prediction of a cell's temperature might not be based on a single other temperature measurement, but based on multiple other temperature measurements, if available. For, the expected temperature value of the cell may be predicted based on a mean or average of the measured temperatures of the cells (e.g., of all cells, of all other cells, of the reference cells or of the neighboring cells) of the multi-cell electrolyzer.

In the previous discussion, it was assumed that the "temperature value" corresponds to the temperature, e.g., to a measured temperature or to a predicted temperature. In some cases, to filter out spurious fluctuations in the measurements, the temperatures may be integrated over time (or current, or voltage), and the respective integrals may be compared to each other. In other words, the expected temperature value of a cell may correspond to an integral of an expected temperature of the cell over time, with the deviation of the expected temperature value of a cell and the measured temperature of the cell being determined between the integral of the expected temperature of the cell and a corresponding integral of the measured temperature of the cell. This way, minor differences in temperature that persist over time can be identified, while spurious events (such as faulty measurements) are evened out. Similarly, the first or second derivative of the respective temperature curves may be taken, to identify differences in trends between different cells. In other words, the expected temperature value of a cell may correspond to a derivative (e.g., the first or second derivative) of an expected temperature of the cell over time (or over current, or voltage), with the deviation of the expected temperature value of a cell and the measured temperature of the cell being determined between the derivative of the expected temperature of the cell and a corresponding derivative of the measured temperature of the cell. Examples of such comparisons are discussed in connection with a "fifth model" discussed in connection with Fig. 5.

According to the invention a notification is provided if a deviation of the expected temperature value of a cell and the measured temperature of the cell matches a temperature deviation condition. As basis for providing 170 the notification, the method comprises determining 135 the deviation the expected temperature value of a cell and the measured temperature of the cell and evaluating the temperature deviation condition. Determining the deviation comprises comparing the respective temperature values, e.g., the temperatures, or the integrals or derivatives over time (or current or voltage) thereof. The result of the comparison is then evaluated with respect to the temperature deviation condition. In some cases, the temperature deviation condition may be a threshold, with the notification being provided if the threshold is surpassed or not surpassed (depending on the temperature deviation condition). In some cases, the temperature deviation condition may comprise a range of allowable deviations and/or one or more ranges of deviations that lead to a notification being provided. If the temperature deviation condition is met, the notification is then provided. For example, providing the notification may include providing a visual notification via a display device, and/or providing the notification may include providing a notification packet to a control system or to one or more client devices, with the notification packet comprising the notification. For example, the notification may include an alarm for an operator/user of the electrolyzer.

In the following, some examples are given with respect to deviations, the temperature deviation condition, and other triggers for providing a notification. For example, at least some of the following examples are discussed in more detail in connection with Fig. 5, where various "models" are introduced, which are used as basis for the notification and/or for a visual representation of the different values. In the present context, a model is a mathematical function or computational task, which takes one or more input values, involves a computation (such as the prediction of the temperature value (or voltage value), and, optionally, a comparison and evaluation of a deviation condition. In other words, the models introduced in connection with Fig. 5 are algorithms, computational tasks, or mathematical functions for processing the signal information.

For example, in a first model, the individual cell voltages, individual cell temperatures and the stack current may be measured and plotted in graphs, to be evaluated manually by an operator of the electrolyzer. Accordingly, the method further may comprise providing 175 a visual representation of at least one of the sensor information, the predicted temperature value of the respective cells, a predicted voltage value of the respective cells, and a prior voltage value of the respective cells.

In a second model and third model, the individual cell voltages are compared with each other, e.g., with one or more neighboring cells, with one or more reference cells, or with an average or mean temperature of the neighboring cell(s), reference cell(s) or all of the cells.

In an eleventh model, to detect $H_2$ leakage (and possible flameless fire which is invisible), any measured high temperature spike may be considered an $H_2$ fire and alarmed. In other words, the method may comprise providing 170 a notification about a suspected fire if the deviation between the expected temperature value of a cell and the measured temperature of the cell exhibits a spike. In this context, a spike is a change in the measured temperature over a predefined time interval is larger than a threshold value, e.g., larger than 10 degrees Celsius in a minute.

In addition to the temperature values of the cells, the cell voltage is another major indicator of the health of the cells. Therefore, an expected voltage value may be determined for each cell, and a measured cell voltage value may be compared with the expected voltage value to determine a voltage deviation. This expected voltage value may be determined similar to the determination of the expected temperature value. Accordingly, the method may comprise predicting 140, based on the sensor information and for each cell of the multi-cell electrolyzer, an expected voltage value of the cell of the multi-cell electrolyzer. For example, the expected voltage value may be determined based on the stack current of the electrolyzer and based on the above-referenced equation $V = A + B \cdot I + C \cdot log\ (I)$ where A represents undesired reactions at electrodes, B represents membrane ruptures, pin holes, degradation, and C represents the degradation of electrodes. Alternatively, or additionally, the expected voltage value may be determined based on the voltage value(s) of one or more other cells, e.g., of one or more neighboring cells, of one or more reference cells, of one or more cells having a similar age, or of all cells. For example, an average or median voltage value across two or more other cells may be used for this purpose. As an alternative to determining the voltage values of the individual cells, the voltage values may be defined by a user. In other words, the method may comprise obtaining 145 the expected voltage value of the cell of the multi-cell electrolyzer as an input (by an operator/user of the electrolyzer). Similar to the temperature value, the voltage value may correspond to a single voltage, or to an integral or derivative of the voltage over time, current or temperature. For example, the expected voltage value of a cell may correspond to an integral or derivative of an expected voltage of the cell over time (or over current or temperature). In other words, the expected voltage value of a cell may correspond to an integral or derivative of an expected voltage of the cell over time, temperature or current. Accordingly, deviation of the expected voltage value of a cell and the measured voltage of the cell may be determined between the integral or derivative of the expected voltage of the cell and a corresponding integral or derivative of the measured voltage of the cell.

For example, the notification may also be provided 170 if a deviation between the cell voltage volage of a cell and an expected voltage value of the cell matches a voltage deviation condition. For example, in a fourth model, a rapid drop in individual cell voltage below a given threshold may be detected, as such a rapid drop indicates a membrane issue, and a notification may be provided if the rapid drop (vis-à-vis the expected voltage value, or vis-à-vis a prior measured voltage value of the cell) is detected. In this context, a rapid drop of the voltage is a change in the measured voltage over a pre-defined time interval that is larger than a threshold value, e.g., larger than 1 V in a minute. This rapid drop in individual cell voltage may be determined relative to an expected voltage value, or relative to a prior measured voltage value of the cell or of a reference cell. Accordingly, as further shown in Fig. 1a, the method may comprise determining 160, for each cell of the multi-cell electrolyzer, and/or for the one or more reference cells, a prior voltage value of the cell based on the sensor information and comparing 165 the prior voltage value with a present voltage measurement (of the same cell, or of any cell in case the prior voltage value is determined for a reference cell) included in the sensor information. For example, the notification may be provided if a rapid drop is detected between the present voltage value and the expected voltage value, or between the present voltage value and the prior voltage value (e.g., according to the pre-defined time interval).

In a fifth and sixth model, the integral and derivative of the respective voltages over time and current, respectively, are used. In other words, the deviation of the expected voltage value of a cell and the measured voltage of the cell may be determined between the integral or derivative of the expected voltage of the cell and a corresponding integral or derivative of the measured voltage of the cell. For example, the notification may be provided if the voltage deviation of the integral is larger than a pre-defined average (allowed) voltage deviation over the given time period, e.g., 10 mV*1 day. This way, small deviations over time become visible and individual one-time deviations do not raise false alarms. With respect to the derivative of the voltage, anomalies in the voltage deviation between different cells or between a cell and a reference cell may detected and a notification may be provided. This may be used to detect dynamic behavior anomalies between cells.

Electrolyzers are dynamic systems having different states and phases, such as a shutdown phase and a startup phase. Shutdown may be defined as 0% current, and startup may be defined as current raising from 0 -20% in less than 60 minutes. The time the individual cells take to reach a voltage plateau (i.e., a stable state) in response to such states is of particular interest for determining the condition (and in particular age-related effects) of the individual cells. Therefore, in some examples, the expected voltage value may comprise an expected voltage and an expected time for reaching the expected voltage in response to a load change. As discussed in connection with the seventh model, the time a single cell takes to come to full startup or full shutdown may be determined, which provides an indication of cell efficiency (longer time equals higher efficiency). Once a startup or shutdown has been detected, for each individual cell, as the voltage is being measured, the time t the cell takes for the voltage level to reach a pre-defined voltage level may be determined. This voltage level can be defined as a simple threshold value, with the first derivative being 0 or the second derivative being 0. This time t may be compared to the expected time for reaching the expected voltage in response to a load change. The expected time may be derived from the time taken for the same transition by the one or more reference cells, or the expected time may be user-defined. If a deviation between time taken by a cell for reaching the expected voltage in response to a load change and the expected time matches a corresponding voltage deviation criterion, the notification may be provided. Details of this process are discussed in connection with the ninth model discussed in connection with Fig. 5.

In many cases, it is useful to know how the respective cells deteriorate over time. Also, for this purpose, the method may comprise determining 160, for each cell of the multi-cell electrolyzer, the prior voltage value of the cell based on the sensor information and comparing the prior voltage value with a present voltage measurement included in the sensor information. The difference may be used to determine a degradation over time, as discussed in connection with a twelfth model described in connection with Fig. 5. Similarly, the difference between the present voltage measurement and a user-defined/operator-defined or reference-cell-derived reference voltage may be calculated to determine a deviation between the individual cells and a desired reference voltage.

As outlined above, the cell voltage primarily depends on two factors - the condition of the cell, and the stack current. This is reflected by the multi-parameter regression formula/equation discussed above: $V = A + B \cdot I + C \cdot log(I)$ where V represents the cell voltage, A represents undesired reactions at electrodes, B represents membrane ruptures, pin holes, degradation, and C represents the degradation of electrodes. This voltage may be used to calculate the expected voltage value of the different cells, once the parameters A, B and C are known (or at least estimated). In other words, the expected voltage value may be based on a multiparameter regression formula, the multi-parameter regression formula comprising a first parameter that models undesired reactions at electrodes, a second parameter that models at least one of membrane ruptures, pin holes and degradation, and a third parameter that models a degradation of the electrodes. As is evident from the formula/equation, one of the parameters is independent of the current I, while one is linearly dependent, and one is logarithmically dependent. By varying the current, the individual contributions of the parameters may be determined. For example, the method may comprise determining 150 a deviation of the expected voltage value of a cell and the measured voltage of the cell, and identifying a contribution of the first, second and third parameter to the deviation using the multi-parameter regression formula, e.g., by varying the current/load, and calculating the contribution of the first, second and third parameter to the deviation based on the response of the cell to the change in current. The result of the parameterization and monitoring this over time is that changes in the parameters can be observed, allowing to pin-point the type of deterioration or failure occurring in the electrolyzer cell. More details of this process are discussed in connection with the eighth model discussed in connection with Fig. 5.

In some examples, both the temperature deviation and the voltage deviation may be used as a common trigger for triggering providing the notification. For example, the notification may be provided if the deviation of the expected temperature value of a cell and the measured temperature of the cell matches the temperature deviation condition and if a deviation between the cell voltage of the cell and an expected voltage value matches a voltage deviation condition.

While the present description primarily relates to hydrogen electrolyzers and chloralkali electrolyzers, the proposed concept is not limited to a specific type of electrolyzers. For example, the proposed concept may be used for different types of (hydrogen) electrolyzers, such as a PEM (Proton Exchange Membrane) electrolyzer, an alkaline electrolyzer, a solid oxide electrolysis-based electrolyzer, or an anion exchange membrane water electrolysis-based electrolyzer. The proposed concept applies to various types of electrolyzers, including electrolyzers with unipolar cells and electrolyzers with bipolar cells, as well as electrolyzers where the cells are arranged in a series configuration and electrolyzers where the cells are arranged in parallel, e.g., in a parallel stack. A unipolar electrolyzer, also known as a "tank-type" electrolyzer, uses porous separators (e.g., membranes) to keep positive and negative electrodes separate. These electrodes are linked together in parallel and are placed in a single electrolyte bath to form a cell. By connecting the cells in series, a multi-cell electrolyzer can be created. Bipolar electrolyzers use a metal sheet, or bipole, to connect adjacent cells in series. For example, the negative electrode electrocatalyst may be coated on one side of the bipole while the positive electrode electrocatalyst of the next cell may be coated on the other side. In the case of bipolar cells, the total voltage is the combined cell voltages, which results in a module that operates at a higher voltage and lower current than the unipolar, tank-type design. To form a large, multi-cell electrolyzer, multiple modules (each comprising multiple cells) are connected in parallel to increase the current. In general, the electrolyzer is a device that uses electricity to drive an otherwise non-spontaneous chemical reaction. In the present context, the electrolyzer may be a device to split compounds, such as water, into their constituent elements, such as hydrogen and oxygen, through electrolysis.

The interface circuitry 12 may correspond to one or more inputs and/or outputs for receiving and/or transmitting information, which may be in digital (bit) values according to a specified code, within a module, between modules or between modules of different entities. For example, the interface circuitry 12 may comprise interface circuitry configured to receive and/or transmit information.

For example, the processing circuitry 14 is implemented using one or more processing units, one or more processing devices, any means for processing, such as a processor, a computer or a programmable hardware component being operable with accordingly adapted software. In other words, the described function of the processing circuitry 14 may as well be implemented in software, which is then executed on one or more programmable hardware components. Such hardware components may comprise a general-purpose processor, a Digital Signal Processor (DSP), a micro-controller, etc.

For example, the storage circuitry 16 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

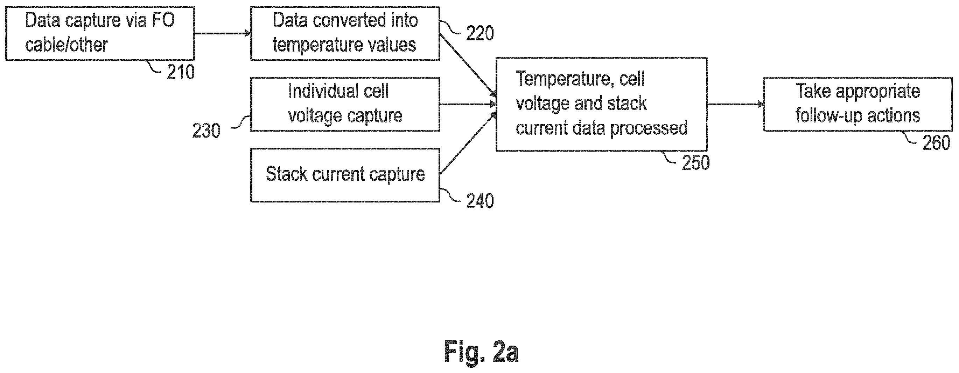

More details and aspects of the method, apparatus, and computer system for monitoring the state of the multi-cell electrolyzer are mentioned in connection with the proposed concept or one or more examples described above or below (e.g., Fig. 2a to 5). The method, apparatus, and computer system for monitoring the state of the multi-cell electrolyzer may comprise one or more additional optional features corresponding to one or more aspects of the proposed concept, or one or more examples described above or below.

Various examples of the present disclosure relate to individual electrolyzer cell performance monitoring based on V (cell voltage), C (stack current) and T (temperature).

The present disclosure relates to electrolyzer monitoring, such as chloralkali, H2 electrolyzers (of various types) or other types of electrolyzers. In an example implementation, the following hardware may be used to capture process-related data (current, individual cell voltage and outer individual cell temperature). For example, current measurement may be performed via the local control system (in an electrolyzer, the current is typically measured and/or controlled by the control system). As an alternative, a separate system to measure stack current may be used. A cell voltage measurement system may be used to accurately measure the individual cell voltage. A temperature measuring device based on optic fiber temperature measurement may be used to measure the outer surface temperature of individual electrolyzer cells with sufficient accuracy. The fiber optic cable of the fiber optic temperature sensor may be arranged at, e.g., wound around, the electrolyzer in various ways, e.g., vertically, horizontally, etc. As an alternative, the optic fiber-based temperature measurement device can be replaced by an infrared camera or some other temperature measurement device which measures individual cell temperature. A further alternative is to measure internal cell temperature. However, this is complex, due to the corrosive environment inside the cells.

The captured data may be received by a monitoring server on which the electrolyzer performance monitoring system runs. This is shown in Figs. 2a, 2b, 3, 4 and 5, for example.

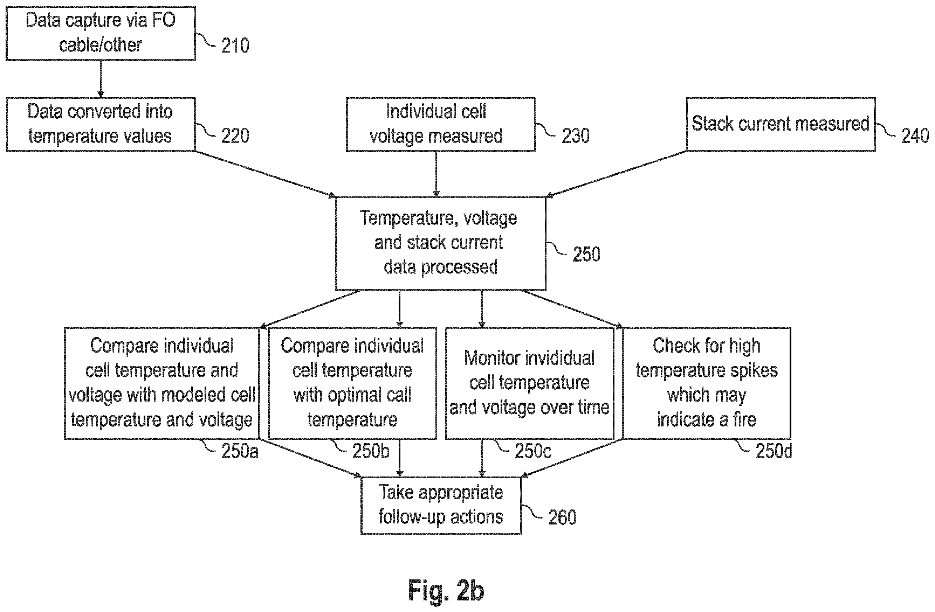

Figs. 2a and 2b show flow charts of examples of flows of measurement and processing of process values of cells of a multi-cell electrolyzer. The flows comprise data capture 210 (of temperature measurements) via a fiber-optic cable or other means, and conversion 220 of the data into temperature values. The flows further comprise capture 230 of individual cell voltage and capture 240 of the stack current. In block 250, the temperature, the cell voltage and the stack current data are processed. For example, as shown in Fig. 2b, the processing 250 may include one or more of comparing individual cell temperature and voltage with modeled cell temperature and voltage (250a), comparing individual cell temperature with optimal cell temperature (250b), monitoring individual cell temperature and voltage over time (250c), and checking for high temperature spikes which may indicate a fire (250d). Then, appropriate follow-up actions may be taken 260.

Fig. 3 shows a schematic diagram of an example of electrolyzer cells of a multi-cell electrolyzer 300 encircled by a fiber-optic cable 25 being used to measure the individual cell temperatures. The electrolyzer cells each comprise a cathode and an anode (shown with different patterns), and the cell voltage (V1.. .Vn) is measured between the cathode and anode of each cell.

In addition, a current measurement probe 40a may be used to determine the stack current of the multi-cell electrolyzer. The current measurement probe 40a may be part of a local control system of the electrolyzer. In Fig. 4, the fiber-optic cable 25 is arranged in a woven or serpentine pattern, instead of encircling the cells. Fig. 4 shows a schematic diagram of an example of electrolyzer cells of a multi-cell electrolyzer 400 with a woven fiber-optic cable.

The temperature values, the cell voltages and the stack current may be evaluated by one or more processing units or processing entities. Fig. 5 shows a schematic diagram of an example of a data processing system comprising such processing units or processing entities. In Fig. 5, the process values of multi-cell electrolyzer 500 are captured by a process unit 10 for converting measured values (measured via the fiber-optic cable 25) into temperature values, a process unit 30 for capturing the individual cell voltages, and a process unit 40 for capturing the stack current. The temperature, voltage and stack current data are processed by a processing entity 50 (e.g., a personal computer or server), according to the concepts presented in connection with Figs. 1a and/or 1b and/or according to the following concepts or models.

The monitoring of the performance of electrolyzers can be beneficial for various reasons, such as overall safety (to prevent or detect a fire, or to prevent an explosion), energy costs (which are lowest at an optimal operating temperature, while badly performing cells are costly to keep running), and to have an overall assessment on whether or when maintenance is required (or not). These purposes can particularly be addressed using individual electrolyzer cell-based monitoring.

On the monitoring entity (e.g., a monitoring server), algorithms and functions operate which may, on a continuous basis, monitor performance, maintenance requirements and safety of individual electrolyzer cells. Various examples of the present disclosure are based on the combination of an electro-chemical model for electrolyzers (which is based on physics and literature) and continuously measured cell voltage, temperature, and stack current values.

The electro chemical process in an individual cell can basically be described by below formula, which also contains coefficients describing particular performance indicators:

$$ V = A + B \cdot I + C \cdot log\,(I) $$

where A represents undesired reactions at electrodes, B represents membrane ruptures, pin holes, degradation, and C represents the degradation of electrodes. This equation can be extended by a heat balance in which cell temperature is one of the key elements.

By measuring Cell voltage, stack current and cell temperature, a comparison can be made between modelled values (i.e., expected temperature/voltage values) and measured values, to detect anomalies. However, in more detailed form also particular differences in individual measured cell voltage or temperature, and/or overall cell performance can be determined. In the proposed concept, based on the measured data and the models described in the following, individual cell performance and particular cell failure mechanisms can be derived.

In the following, a number of models are described, of which one or more may be used by the overall system. For example, one or more of the following models may be used as part of the method or computer program of Fig. 1a, and/or computed by the apparatus 50 of Fig. 1b. In the present context, models are computational task, which may have different types of outputs, such as a graphical representation of the computation or a notification. For example, in a first model, the individual cell voltages, individual cell temperatures and the stack current may be measured and plotted in graphs, to be evaluated manually by an operator of the electrolyzer. In a second model, the individual cell temperatures may be compared with each other. Cells with a larger deviation to what has been prescribed as healthy are alarmed (i.e., an alarm notification is provided). This can be achieved by creating and updating a table (or other type of data structure) of each cell and its temperature. In a third model, individual cell temperatures may be compared between neighboring cells. Typically, a badly performing cell results in a different temperature than expected. Results can be presented in a table or graph, making it easy to detect suspicious cells.

In a fourth model, a rapid drop in individual cell voltage below a given threshold is detected, as such a rapid drop indicates a membrane issue and is alarmed in combination with an increase in cell temperature. Such behavior may be monitored, and a follow-up alarm may be generated if this happens.

In a fifth model, a number of cells are defined as reference cells that are known to behave in a healthy mode. The voltage may be measured/monitored over a particular time period (e.g., 1, 2 days). The voltage may be integrated over time, and the integral may be assigned as the reference value for a particular time frame. The integral can now be used as reference value. For each individual cell, the cell voltage may be measured and integrated over a similar time frame, e.g., 1 to 2 days. The integral of the individual cell may then be compared with the reference value. An alarm may be raised if the difference is larger than a pre-defined average (allowed) deviation over the given time period, e.g., 10 mV*1 day. This way, small deviations over time become visible and individual one-time deviations do not raise false alarms. To check the value of the reference cells, a user-defined reference value may be entered into the system and a similar calculation method to the above method may be used. This can then be used to check the calculated reference value in a similar way as described above. A benefit of selecting a limited set of reference cells is that a better overall indication of individual cell health compared to potential cell health is achieved compared to taking the integration of all measurements. Similar to the voltage, the same may be done for the temperature, even other integrations over other parameters then time may be considered, for example voltage over current etc. This model detects anomalies over time.

In a sixth model, in line with the fifth model, as an alternative to integrating over time, the derivative of voltage and temperature changes may be used as function of the stack current (or other parameters may be used to extract the derivative), especially in the case of load changes (current changes), with individual cells being compared with reference cells. Anomalies may be alarmed when found. This may be used to detect dynamic behavior anomalies between cells.

In a seventh model, the time a single cell takes to come to full startup or full shutdown may be determined, which provides an indication of cell efficiency (longer time equals higher efficiency). A method may be provided where individual times can be compared to define badly performing, average performing and good performing cells. This can be achieved by measuring the individual cell voltage of each electrolyzer cell, and collecting the control signal which controls the current fed into the electrolyzer as a reference to startup or shutdown operations detection. Shutdown may be defined as 0% current, and startup may be defined as current raising from 0 -20% in less than 60 minutes. Once a startup or shutdown has been detected, for each individual cell, as the voltage is being measured, the time t the cell takes for the voltage level to reach a pre-defined voltage level may be determined. This voltage level can be defined as a simple threshold value, with the first derivative being 0 or the second derivative being 0. For the selected timeframe, which may be derived per single cell, the collected points may be integrated over time, such that a weighted average gives an indication of the average time to reach the pre-defined voltage level. For each cell, the results may be plotted, and the cells may be grouped into multiple groups, e.g., badly performing cells (linked to low t number), average-performing cells (linked to an average t number) and high-performing cells (linked to highest t number). A reference cell with healthy behavior (e.g., a new cell) may be used to compare relative outcomes to an ideal situation.

In an eight model, using a multiparameter regression formula, a healthy cell may be modeled in startup, going to full load zone, shutdown zone and load change zone (with the current being changed while in normal operation) in such a way that failure-specific parameters are assigned to the regression formula (model). Next, individual cells may be modelled via regression as well and individual parameters may be compared to indicate particular failures, with the inputs being measured being cell voltage, stack current and cell temperature. To verify whether an individual cell is preforming properly or e.g., aging is starting to happen, each cell may be fitted with a current voltage curve which is built up for a number of predefined parameters (see model 7). This curve may be built up such that particular cell characteristics are present in the form of coefficients. By placing a threshold on one or more characteristics, a conclusion can be drawn on the cell state in reference to a predefined reference value. Further individual parameters of individual cells can be compared as to denote differences in cell performance. This fitting process may be made in 4 zones - a startup zone (0-20% current), going to full load zone (20-100%), shutdown zone (current set to 0) and load change zone (current is changed). A similar approach can be taken across a whole electrolyzer unit as to determine electrolyzer characteristics which are helpful during operation.

In a ninth model, a number of cells that are known to behave in a healthy mode may be defined as reference cells. This way, the 'best' preforming cells can be set as reference to the other cells. The average value of these reference cells may be calculated and assigned as the calculated reference value for a particular moment in time. This reference value may be used as calculated reference value for time t. A user/operator may define a theoretical reference voltage by entering the reference voltage into the system. This reference voltage may be used as user input to detect deviation over time between the first (calculated based on measured cell voltage of reference cells) and second reference value (input from user). For each individual cell, the cell voltage may be measured in a similar time frame as the measurement of the refence cells. The result of both may be compared, and an alarm may be raised if the difference is larger than a particular average deviation e.g., 10mV. To verify the quality of the reference calculation, each time the reference value is calculated, the calculated reference value may be compared to the user-defined reference value. If the deviation is above a certain level, a new set of reference cells may be assigned to the algorithm. In case of start-up and shutdown, the algorithm may be adapted to include process conditions as to prevent false alarms to be raised.

In a tenth model, an energy balance may be used to predict cell temperature based on stack current and cell voltage as input. This may be compared with the measured outer cell temperature. Anomalies may be alarmed.

In an eleventh model, to detect $H_2$ leakage (and possible flameless fire which is invisible), any measured high temperature spike may be considered an $H_2$ fire and alarmed.

In a twelfth model, degradation over time compared to the initial model setup may be analyzed and alarmed. The equation $V = A + B \cdot I + C \cdot log(I)$ introduced above may be used to model the expected situation. This equation may be segregated in individual parts (e.g., A, B, C) to determine the cause of the degradation.

In case of hydrogen-producing plants, cell temperature is useful for prediction and monitoring, to balance efficiency with overall cell lifetime. A thirteenth model may be created based on the provided formula which predicts individual cell temperature and cell voltage. By comparing the predicted voltage and temperature with measured values, an optimization routine can be used to further iterate and improve or optimize a working temperature of the electrolyzer, thus improving running costs vs production yield.

By measuring the individual cell voltage and cell temperature, with stack current as input, comparisons can be made on the performance of individual electrolyzer cells based on continuous measured data. By measuring cell voltage, stack current and cell temperature, the three key parameters for cell performance modeling are available as measured values and therefore can be used to verify predicted values to measured values, providing an accurate method to detect cell issues. Based on the model and measured data, it is possible to pinpoint the cause of the anomalies, e.g., membrane, undesired reactions at electrodes or degradation of electrodes.

Cell temperature is an important element in overall cell performance, especially for hydrogen production. In case modelling is used to predict cell temperature, a validation can be performed between model and individual cell temperature and monitored over time. Deviations, which may indicate cell deterioration, or which show undesired operating temperatures can be monitored online, and suitable follow up action can be taken. In case cell temperature is not modelled, the measured cell temperature can be used to improve the cell performance. Moreover, cell temperature can be monitored overtime. Changes in the cell temperature of an individual cell are an indication of cell problems and may be flagged for follow-up action. In case of leakage, a flameless fire may occur. Temperature spikes are measured in such case. An alarm can be generated to, for example, shut down the electrolyzer, and inform authorities to take the required actions.

In the previous examples, it was assumed that the individual cell temperature is measured using a fiber-optic temperature sensor. There are other ways to measure outer cell temperature, for example via a camera measuring surface temperature. As a camera typically has a limited viewing angle, either multiple cameras or a camera with build in movement or rotation mechanism may be used. The data captured by a camera is in a different format compared to a fiber-optic cable. Accordingly, the exact position of a particular measurement point will need some data processing to be determined exactly. Moreover, the measurement may contain much more data, which may be fed into smart algorithms detecting variations in temperature in more detail. Such details may be processed to be able to compare this to e.g., calculated values. To detect hydrogen fires, such a camera may require the right properties to do so.

In some examples, a robot may be used to capture similar and/or other electrolyzer data, such as temperature measurement via device placed on robot, e.g., an infrared camera or a temperature probe, or image capture, e.g., to detect particular coloring of tubes through which end products are discharged from the electrolyzer cell. The additional data can be entered into the described (& enhanced) or new models for further processing.

Various examples of the present disclosure use individual cell temperature measurement, by means of a fiber-optic cable or other method, individual cell voltage measurement and stack current measurement. A processing unit may be used to convert the measured temperature into a format that can be used to compare individual cell temperatures. A processing unit with models, which compare measured values between cell temperatures, may be used to detect anomalies. A processing unit that contains a model to predict individual cell voltage and temperature and to compare these with measured values may be used. A processing unit which further contains one or more of the above units may be used. A processing unit to detect flames based on temperature spikes may be used. For example, the above-referenced processing units may be implemented as a single or as separate processing units. Optionally, other means of detecting cell temperature, such as image-based temperature measurement, may be used. Optionally, other means of detecting other relevant cell performance parameters, such as cell performance parameters captured by a robot, e.g., cell temperature, image of transparent pipelines containing produced products may be used. Such pipelines may change color in case of issues happening inside the electrolyzer.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors, or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

**Claims**

1. A method for monitoring a state of a multi-cell electrolyzer, the method comprising:

   obtaining (110) sensor information, the sensor information comprising at least information on a measured temperature of the individual cells of the multi-cell electrolyzer;
   predicting (130), based on the sensor information and for each cell of the multi-cell electrolyzer, an expected temperature value of the cell of the multi-cell electrolyzer; and
   providing (170) a notification if a deviation of the expected temperature value of a cell and the measured temperature of the cell matches a temperature deviation condition.

2. The method according to claim 1, wherein the sensor information comprises information on a stack current of the multi-cell electrolyzer and information on an individual cell voltage of cells of the multi-cell electrolyzer, the expected temperature value of the cell being predicted based on the cell voltage of the cell and based on the stack current of the multi-cell electrolyzer.

3. The method according to one of the claims 1 or 2, wherein the expected temperature value of the cell is predicted based on the measured temperature of one or more neighboring cells of the multi-cell electrolyzer.

4. The method according to one of the claims 1 to 3, wherein the expected temperature value of the cell is predicted based on a mean or average of the measured temperatures of the cells of the multi-cell electrolyzer.

5. The method according to one of the claims 1 to 4, wherein the expected temperature value of the cell is predicted based on one or more reference cells of the multi-cell electrolyzer.

6. The method according to claim 5, wherein the method further comprises selecting (120) the one or more reference cells based on the sensor information.

7. The method according to one of the claims 1 to 6, wherein the expected temperature value of a cell corresponds to an integral or derivative of an expected temperature of the cell over time, voltage or current, with the deviation of the expected temperature value of a cell and the measured temperature of the cell being determined between the integral or derivative of the expected temperature of the cell and a corresponding integral or derivative of the measured temperature of the cell.

8. The method according to one of the claims 1 to 7, wherein the method comprises providing (170) a notification about a suspected fire if the deviation between the expected temperature value of a cell and the measured temperature of the cell exhibits a spike.

9. The method according to one of the claims 1 to 8, wherein the sensor information comprises information on a stack current of the multi-cell electrolyzer and information on an individual cell voltage of cells of the multi-cell electrolyzer, the method comprising predicting (140), based on the sensor information and for each cell of the multi-cell electrolyzer, an expected voltage value of the cell of the multi-cell electrolyzer, or obtaining (145) the expected voltage value of the cell of the multi-cell electrolyzer as an input.

10. The method according to claim 9, wherein the expected voltage value comprises an expected voltage and an expected time for reaching the expected voltage in response to a load change.

11. The method according to one of the claims 9 or 10, wherein the expected voltage value is based on a multi-parameter regression formula, the multi-parameter regression formula comprising a first parameter that models undesired reactions at electrodes, a second parameter that models at least one of membrane ruptures, pin holes and degradation, and a third parameter that models a degradation of the electrodes, wherein the method comprises determining (150) a deviation of the expected voltage value of a cell and the measured voltage of the cell, and identifying a contribution of the first, second and third parameter to the deviation using the multi-parameter regression formula.

12. The method according to one of the claims 9 to 11, wherein the expected voltage value of a cell corresponds to an integral or derivative of an expected voltage of the cell over time, temperature or current, with the deviation of the expected voltage value of a cell and the measured voltage of the cell being determined between the integral or derivative of the expected voltage of the cell and a corresponding integral or derivative of the measured voltage of the cell.

13. The method according to one of the claims 9 to 12, wherein the method comprises determining (160), for each cell of the multi-cell electrolyzer and/or for one or more reference cells, a prior voltage value of the cell based on the sensor information and comparing the prior voltage value with a present voltage measurement included in the sensor information.

14. The method according to one of the claims 1 to 13, wherein the information on the measured temperature of the cells of the multi-cell electrolyzer is obtained from a fiber-optic temperature sensor or from a camera-based temperature sensor.

15. A computer program having a program code for performing the method of one of the claims 1 to 14, when the computer program is executed on a computer, a processor, or a programmable hardware component.

16. An apparatus (50) for monitoring a state of a multi-cell electrolyzer, the apparatus comprising:

> interface circuitry (52) for obtaining sensor information from one or more sensors; and
> processing circuitry (54) configured to perform the method according to one of the claims 1 to 14.

**Patentansprüche**

1. Verfahren zum Überwachen eines Zustands eines Mehrzellen-Elektrolyseurs, wobei das Verfahren folgende Schritte aufweist:

> Erhalten (110) von Sensorinformationen, wobei die Sensorinformationen zumindest Informationen über eine gemessene Temperatur der einzelnen Zellen des Mehrzellen-Elektrolyseurs aufweisen;
> Vorhersagen (130), basierend auf den Sensorinformationen und für jede Zelle des Mehrzellen-Elektrolyseurs, eines erwarteten Temperaturwerts der Zelle des Mehrzellen-Elektrolyseurs; und
> Bereitstellen (170) einer Benachrichtigung, wenn eine Abweichung des erwarteten Temperaturwerts einer Zelle und der gemessenen Temperatur der Zelle mit einer Temperaturabweichungsbedingung zusammenpasst.

2. Verfahren gemäß Anspruch 1, wobei die Sensorinformationen Informationen über einen Stapelstrom des Mehrzellen-Elektrolyseurs und Informationen über eine Einzelzellenspannung von Zellen des Mehrzellen-Elektrolyseurs aufweisen, wobei der erwartete Temperaturwert der Zelle basierend auf der Zellenspannung der Zelle und basierend auf dem Stapelstrom des Mehrzellen-Elektrolyseurs vorhergesagt wird.

3. Verfahren gemäß einem der Ansprüche 1 oder 2, wobei der erwartete Temperaturwert der Zelle basierend auf der gemessenen Temperatur einer oder mehrerer benachbarter Zellen des Mehrzellen-Elektrolyseurs vorhergesagt wird.

4. Verfahren gemäß einem der Ansprüche 1 bis 3, wobei der erwartete Temperaturwert der Zelle basierend auf einem Mittelwert oder Durchschnitt der gemessenen Temperaturen der Zellen des Mehrzellen-Elektrolyseurs vorhergesagt wird.

5. Verfahren gemäß einem der Ansprüche 1 bis 4, wobei der erwartete Temperaturwert der Zelle basierend auf einer oder mehreren Referenzzellen des Mehrzellen-Elektrolyseurs vorhergesagt wird.

6. Verfahren gemäß Anspruch 5, wobei das Verfahren ferner ein Auswählen (120) der einen oder mehreren Referenzzellen basierend auf den Sensorinformationen aufweist.

7. Verfahren gemäß einem der Ansprüche 1 bis 6, wobei der erwartete Temperaturwert einer Zelle einem Integral oder einer Ableitung einer erwarteten Temperatur der Zelle über Zeit, Spannung oder Strom entspricht, wobei die Abweichung des erwarteten Temperaturwerts einer Zelle und der gemessenen Temperatur der Zelle zwischen dem Integral oder der Ableitung der erwarteten Temperatur der Zelle und einem entsprechenden Integral oder einer entsprechenden Ableitung der gemessenen Temperatur der Zelle bestimmt wird.

8. Verfahren gemäß einem der Ansprüche 1 bis 7, wobei das Verfahren ein Bereitstellen (170) einer Benachrichtigung über einen vermuteten Brand aufweist, wenn die Abweichung zwischen dem erwarteten Temperaturwert einer Zelle und der gemessenen Temperatur der Zelle eine Spitze aufweist.

9. Verfahren gemäß einem der Ansprüche 1 bis 8, wobei die Sensorinformationen Informationen über einen Stapelstrom des Mehrzellen-Elektrolyseurs und Informationen über eine Einzelzellenspannung von Zellen des Mehrzellen-Elektrolyseurs aufweisen, wobei das Verfahren ein Vorhersagen (140), basierend auf den Sensorinformationen und für jede Zelle des Mehrzellen-Elektrolyseurs, eines erwarteten Spannungswerts der Zelle des Mehrzellen-Elektrolyseurs oder Erhalten (145) des erwarteten Spannungswerts der Zelle des Mehrzellen-Elektrolyseurs als Eingabe aufweist.

10. Verfahren gemäß Anspruch 9, wobei der erwartete Spannungswert eine erwartete Spannung und eine erwartete Zeit zum Erreichen der erwarteten Spannung ansprechend auf eine Laständerung aufweist.

11. Verfahren gemäß einem der Ansprüche 9 oder 10, wobei der erwartete Spannungswert auf einer Mehrparameter-Regressionsformel basiert, wobei die Mehrparameter-Regressionsformel einen ersten Parameter, der unerwünschte Reaktionen an Elektroden modelliert, einen zweiten Parameter, der zumindest eines von Membranrissen, Nadellöchern und Verschlechterung modelliert, und einen dritten Parameter, der eine Verschlechterung der Elektroden modelliert, aufweist, wobei das Verfahren ein Bestimmen (150) einer Abweichung des erwarteten Spannungswerts einer Zelle und der gemessenen Spannung der Zelle und ein Identifizieren eines Beitrags des ersten, zweiten und dritten Parameters zu der Abweichung unter Verwendung der Mehrparameter-Regressionsformel aufweist.

12. Verfahren gemäß einem der Ansprüche 9 bis 11, wobei der erwartete Spannungswert einer Zelle einem Integral oder einer Ableitung einer erwarteten Spannung der Zelle über Zeit, Temperatur oder Strom entspricht, wobei die Abweichung des erwarteten Spannungswerts einer Zelle und der gemessenen Spannung der Zelle zwischen dem Integral oder der Ableitung der erwarteten Spannung der Zelle und einem entsprechenden Integral oder einer entsprechenden Ableitung der gemessenen Spannung der Zelle bestimmt wird.

13. Verfahren gemäß einem der Ansprüche 9 bis 12, wobei das Verfahren ein Bestimmen (160), für jede Zelle des Mehrzellen-Elektrolyseurs und/oder für eine oder mehrere Referenzzellen, eines früheren Spannungswerts der Zelle basierend auf den Sensorinformationen und ein Vergleichen des früheren Spannungswerts mit einer gegenwärtigen Spannungsmessung, die in den Sensorinformationen enthalten ist, aufweist.

14. Verfahren gemäß einem der Ansprüche 1 bis 13, wobei die Informationen über die gemessene Temperatur der Zellen des Mehrzellen-Elektrolyseurs von einem faseroptischen Temperatursensor oder von einem kamerabasierten Temperatursensor erhalten werden.

15. Computerprogramm mit einem Programmcode zum Durchführen des Verfahrens gemäß einem der Ansprüche 1 bis 14, wenn das Computerprogramm auf einem Computer, einem Prozessor oder einer programmierbaren Hardwarekomponente ausgeführt wird.

16. Vorrichtung (50) zum Überwachen eines Zustands eines Mehrzellen-Elektrolyseurs, wobei die Vorrichtung folgende Merkmale aufweist:

einen Schnittstellenschaltungsaufbau (52) zum Erhalten von Sensorinformationen von einem oder mehreren Sensoren; und
einen Verarbeitungsschaltungsaufbau (54), der dazu konfiguriert ist, das Verfahren gemäß einem der Ansprüche 1 bis 14 durchzuführen.

**Revendications**

1. Procédé de surveillance de l'état d'un électrolyseur multicellulaire, le procédé comprenant le fait de :

obtenir (110) des informations de capteur, les informations de capteur comprenant au moins des informations sur une température mesurée des cellules individuelles de l'électrolyseur multicellulaire ;
prédire (130), sur la base des informations de capteur et pour chaque cellule de l'électrolyseur multicellulaire, une valeur de température attendue de la cellule de l'électrolyseur multicellulaire ; et
fournir (170) une notification si un écart entre la valeur de température attendue d'une cellule et la température mesurée de la cellule correspond à une condition d'écart de température.

2. Procédé selon la revendication 1, dans lequel les informations de capteur comprennent des informations sur un courant d'empilement de l'électrolyseur multicellulaire et des informations sur une tension de cellule individuelle des cellules de l'électrolyseur multicellulaire, la valeur de température attendue de la cellule étant prédite sur la base de la tension de cellule de la cellule et sur la base du courant d'empilement de l'électrolyseur multicellulaire.

3. Procédé selon l'une des revendications 1 ou 2, dans lequel la valeur de température attendue de la cellule est prédite sur la base de la température mesurée d'une ou plusieurs cellules voisines de l'électrolyseur multicellulaire.

4. Procédé selon l'une des revendications 1 à 3, dans lequel la valeur de température attendue de la cellule est prédite sur la base d'une moyenne des températures mesurées des cellules de l'électrolyseur multicellulaire.

5. Procédé selon l'une des revendications 1 à 4, dans lequel la valeur de température attendue de la cellule est prédite sur la base d'une ou plusieurs cellules de référence de l'électrolyseur multicellulaire.

6. Procédé selon la revendication 5, dans lequel le procédé comprend en outre la sélection (120) de l'une ou plusieurs cellules de référence sur la base des informations de capteur.

7. Procédé selon l'une des revendications 1 à 6, dans lequel la valeur de température attendue d'une cellule correspond à une intégrale ou à une dérivée d'une température attendue de la cellule en fonction du temps, de la tension ou du courant, l'écart entre la valeur de température attendue d'une cellule et la température mesurée de la cellule étant déterminé entre l'intégrale ou la dérivée de la température attendue de la cellule et une intégrale ou une dérivée correspondante de la température mesurée de la cellule.

8. Procédé selon l'une des revendications 1 à 7, dans lequel le procédé comprend la fourniture (170) d'une notification concernant un incendie suspecté si l'écart entre la valeur de température attendue d'une cellule et la température mesurée de la cellule présente un pic.

9. Procédé selon l'une des revendications 1 à 8, dans lequel les informations de capteur comprennent des informations sur un courant d'empilement de l'électrolyseur multicellulaire et des informations sur une tension de cellule individuelle des cellules de l'électrolyseur multicellulaire, le procédé comprenant la prédiction (140), sur la base des informations de capteur et pour chaque cellule de l'électrolyseur multicellulaire, d'une valeur de tension attendue de la cellule de l'électrolyseur multicellulaire, ou l'obtention (145) de la valeur de tension attendue de la cellule de l'électrolyseur multicellulaire en tant qu'entrée.

10. Procédé selon la revendication 9, dans lequel la valeur de tension attendue comprend une tension attendue et un temps attendu pour atteindre la tension attendue en réponse à un changement de charge.

11. Procédé selon l'une des revendications 9 ou 10, dans lequel la valeur de tension attendue est basée sur une formule de régression multiparamétrique, la formule de régression multiparamétrique comprenant un premier paramètre qui modélise les réactions indésirables au niveau des électrodes, un deuxième paramètre qui modélise au moins l'une parmi les ruptures de membrane, les trous d'épingle et la dégradation, et un troisième paramètre qui modélise une dégradation des électrodes, dans lequel le procédé comprend déterminer (150) un écart entre la valeur de tension attendue d'une cellule et la tension mesurée de la cellule, et identifier d'une contribution des premier, deuxième et troisième paramètres à l'écart à l'aide de la formule de régression multiparamétrique.

12. Procédé selon l'une des revendications 9 à 11, dans lequel la valeur de tension attendue d'une cellule correspond à une intégrale ou à une dérivée d'une tension attendue de la cellule en fonction du temps, de la température ou du courant, l'écart entre la valeur de tension attendue d'une cellule et la tension mesurée de la cellule étant déterminé entre l'intégrale ou la dérivée de la tension attendue de la cellule et une intégrale ou une dérivée correspondante de la tension mesurée de la cellule.

13. Procédé selon l'une des revendications 9 à 12, dans lequel le procédé comprend déterminer (160), pour chaque cellule de l'électrolyseur multicellulaire et/ou pour une ou plusieurs cellules de référence, une valeur de tension antérieure de la cellule sur la base des informations de capteur et la comparaison de la valeur de tension antérieure avec une mesure de tension actuelle incluse dans les informations de capteur.

14. Procédé selon l'une des revendications 1 à 13, dans lequel les informations sur la température mesurée des cellules de l'électrolyseur multicellulaire sont obtenues à partir d'un capteur de température à fibre optique ou d'un capteur de température à caméra.

15. Programme informatique comportant un code de programme permettant d'exécuter le procédé selon l'une des revendications 1 à 14, lorsque le programme informatique est exécuté sur un ordinateur, un processeur ou un composant matériel programmable.

16. Appareil (50) pour surveiller l'état d'un électrolyseur multicellulaire, l'appareil comprenant :

   un ensemble de circuits d'interface (52) pour obtenir des informations de capteur à partir d'un ou plusieurs capteurs ; et
   un ensemble de circuits de traitement (54) configuré pour exécuter le procédé selon l'une des revendications 1 à 14.

Fig. 1a

**Fig. 1b**

```
┌─────────────────────┐         ┌─────────────────────┐
│  Data capture via FO│────────>│  Data converted into│    220
│  cable/other        │         │  temperature values │
└─────────────────────┘         └─────────────────────┘
              210

                                ┌─────────────────────┐        ┌──────────────────────┐        ┌─────────────────────┐
                                │  Individual cell    │        │  Temperature, cell   │        │  Take appropriate   │
                     230        │  voltage capture    │───────>│  voltage and stack   │───────>│  follow-up actions  │
                                └─────────────────────┘        │  current data processed│      └─────────────────────┘
                                                               └──────────────────────┘                  260
                                ┌─────────────────────┐                   250
                                │  Stack current capture│
                                └─────────────────────┘
                                          240
```

**Fig. 2a**

**Fig. 2b**

Data capture via FO cable/other — 210

Data converted into temperature values — 220

Individual cell voltage measured — 230

Stack current measured — 240

Temperature, voltage and stack current data processed — 250

Compare individual cell temperature and voltage with modeled cell temperature and voltage — 250a

Compare individual cell temperature with optimal call temperature — 250b

Monitor invididual cell temperature and voltage over time — 250c

Check for high temperature spikes which may indicate a fire — 250d

Take appropriate follow-up actions — 260

**Fig. 3**

**Fig. 4**

EP 4 345 194 B1

**Fig. 5**

EP 4 345 194 B1

**EP 4 345 194 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021158076 A
- EP 3964607 A1
- WO 2022129249 A1
- JP 2008231537 A